(19) Europäisches Patentamt
European Patent Office
Office européen des brevets

(11) **EP 4 386 018 A1**

(12) **EUROPEAN PATENT APPLICATION**

(43) Date of publication:
**19.06.2024 Bulletin 2024/25**

(21) Application number: **23215829.5**

(22) Date of filing: **12.12.2023**

(51) International Patent Classification (IPC):
***C08F 210/16*** *(2006.01)*     ***C08F 2/00*** *(2006.01)*
***C08F 4/652*** *(2006.01)*     ***C08L 23/06*** *(2006.01)*
***C08L 23/08*** *(2006.01)*

(52) Cooperative Patent Classification (CPC):
(C-Sets available)
**C08F 210/16; C08F 2/001; C08F 4/652;
C08L 23/06; C08L 23/0815**     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2022 KR 20220173890**

(71) Applicant: **Hanwha TotalEnergies Petrochemical
Co., Ltd.
Seosan-si, Chungcheongnam-do 31900 (KR)**

(72) Inventors:
• **KIM, Young Gu**
  **Seosan-si 31900 (KR)**
• **HAN, Jae Hyuck**
  **Seosan-si 31900 (KR)**
• **PARK, Eun Jin**
  **Seosan-si 31900 (KR)**

(74) Representative: **Meroni, Francesca et al
Jacobacci & Partners S.p.A.
Via Senato, 8
20121 Milano (IT)**

(54) **POLYETHYLENE RESIN COMPOSITION FOR PIPE, MANUFACTURING METHOD THEREOF AND MOLDED ARTICLE MANUFACTURED THEREFROM**

(57)     Embodiment of the present disclosure provides a polyethylene resin composition for pipe, which has a melt index (under a load of 5 kg, at 190 °C) of 0.10 g/10 min or more and less than 0.25 g/10 min, and is prepared by passing through a two-stage reactor and a twin screw extruder, wherein a rate of change in the melt index (MI) (under a load of 5 kg, at 190 °C) by the twin screw extruder is 10% to 45% according to Equation 1 below.

[Equation 1]

$$\{(\text{MI after passing through two-stage reactor} - \text{MI after passing through twin screw extruder}) / (\text{MI after passing through two-stage reactor})\} \times 100$$

**(Cont. next page)**

EP 4 386 018 A1

(52) Cooperative Patent Classification (CPC): (Cont.)

C-Sets
C08F 210/16, C08F 210/14, C08F 2500/11, C08F 2500/12, C08F 2500/17

**Description**

BACKGROUND

1. Field

Embodiments relate to a polyethylene resin composition for pipe, a method of preparing the same, and a molded article prepared therefrom.

2. Description of the Related Art

Pipes made with polyethylene have been used for water pipes, sewage pipes, industrial pipes, and the like, and have greater resistance to sagging and resistance to slow crack growth to be applicable to large-diameter pipes, and the use thereof is gradually diversifying.

When processing large-diameter pipes, resistance to sagging caused by the weight of pipe itself is indispensable, and this may be improved by reducing melt index of a polyethylene resin.

Methods of reducing the melt index (MI) may include changing physical properties of the polyethylene resin itself, changing extrusion conditions as a post-treatment method, or adding peroxide upon extrusion.

The large-diameter pipes are time consuming and cost a lot for production and installation, and thus high resistance to slow crack growth is required to enable long-term use once installed. The reducing of the melt index (MI) with the addition of peroxide without changing the physical properties of the polyethylene resin itself, or with the extrusion conditions increases the resistance to sagging but has limitations such as a decrease in the resistance to slow crack growth and an increase in an odor level.

SUMMARY

An embodiment of the present disclosure provides a polyethylene resin composition for pipe in which resistance to sagging of pipe, resistance to slow crack growth, and an odor level are all good.

Another embodiment of the present disclosure provides a method of preparing the polyethylene resin composition for pipe.

Another embodiment of the present disclosure provides a molded article prepared from the polyethylene resin composition for pipe.

An embodiment of the present disclosure provides a polyethylene resin composition for pipe has a melt index (under a load of 5 kg, at 190 °C) of 0.10 g/10 min or more and less than 0.25 g/10 min, and is prepared by passing through a two-stage reactor and a twin screw extruder,

wherein a rate of change in the melt index (MI) (under a load of 5 kg, at 190 °C) by passing through the twin screw extruder is 10% to 45% according to Equation 1 below.

[Equation 1]

$$\{(\text{MI after passing through two-stage reactor} - \text{MI after passing through twin screw extruder}) / (\text{MI after passing through two-stage reactor})\} \times 100$$

The polyethylene resin composition may have a strain hardening modulus of 70 MPa to 90 MPa.

The polyethylene resin composition may have a zero shear viscosity ($\eta^0$) of 6,000,000 poise to 20,000,000 poise.

The polyethylene resin composition may have a melt strength of 170 mN to 300 mN.

In the polyethylene resin composition, a rate of reduction in drop time in the presence of sagging versus drop time in the absence of sagging upon extrusion may be 0% to 22%.

Another embodiment of the present disclosure provides a method of preparing a polyethylene resin composition for pipe includes injecting a monomer, a catalyst, and a comonomer into a two-stage reactor to obtain a polyethylene resin; and making the polyethylene resin pass through a twin screw extruder to obtain a polyethylene resin composition, wherein the twin screw extruder is operated at a temperature of 230 °C to 250 °C, and the polyethylene resin obtained after passing through the two-stage reactor has a melt index (MI) (under a load of 5 kg, at 190 °C) of 0.30 g/10 min to 0.38 g/10 min.

The twin screw extruder may be operated at a condition of 1050 rpm to 1150 rpm.

The polyethylene resin composition after passing through the twin screw extruder may have a melt index (MI) (under a load of 5 kg, at 190 °C) of 0.10 g/10 min or more and less than 0.25 g/10 min.

Another embodiment of the present disclosure provides a molded article prepared from the polyethylene resin composition for pipe.

DETAILED DESCRIPTION

Hereinafter, embodiments will be described in detail, and may be readily performed by those who have common knowledge in the related art. However, embodiments may be embodied in many different forms and should not be construed as limited to the embodiments set forth herein.

An embodiment provides a polyethylene resin composition for pipe, which has a melt index (under a load of 5 kg, at 190 °C) of 0.10 g/10 min or more and less than 0.25 g/10 min, and is prepared by passing through a two-stage reactor and a twin screw extruder, wherein a rate of change in the melt index (MI) (under a load of 5 kg, at 190 °C) by passing through the twin screw extruder is 10% to 45% according to Equation 1 below.

The polyethylene resin composition for pipe according to an embodiment may have a melt index (under a load of 5 kg, at 190 ° C) of 0.10 g/10 min or more and less than 0.25 g/10 min, for example, 0.10 g/10 min to 0.24 g/10 min, 0.10 g/10 min to 0.23 g/10 min, 0.10 g/10 min to 0.22 g/10 min, or 0.18 g/10 min to 0.22 g/10 min. When the melt index (MI) of the polyethylene resin composition is within the above range, processing load and surface roughness of products are reduced upon pipe processing, and resistance to sagging of pipe and strain hardening modulus thereof may be increased. Accordingly, a polyethylene resin composition in which resistance to sagging of pipe, resistance to slow crack growth, and an odor level are all good may be obtained.

The polyethylene resin composition may have changes in the melt index (MI) by passing through an extruder in the process of manufacturing before obtaining the final melt index (MI). To be specific, monomers, catalysts, and comonomers are injected into a two-stage reactor and subjected to a polymerization reaction to obtain a polyethylene resin, and then the polyethylene resin passes through a twin screw extruder to prepare a polyethylene resin composition for pipe. In this process, the polyethylene resin that has passed through the two-stage reactor has a reduced melt index (MI) by passing through the twin screw extruder.

In the polyethylene resin composition, a rate of change in the melt index (MI) (under a load of 5 kg, at 190 °C) by passing through the twin screw extruder is 10% to 45%, for example 20% to 42% according to Equation 1 below.

[Equation 1]

$$\{(\text{MI after passing through two-stage reactor} - \text{MI after passing through twin screw extruder}) / (\text{MI after passing through two-stage reactor})\} \times 100$$

When the rate of change in the melt index by passing through the twin screw extruder is within the above ranges, a polyethylene resin composition in which the resistance to sagging of pipe, the resistance to slow crack growth, and the odor level are all good may be obtained.

The polyethylene resin composition may have a strain hardening modulus of 70 MPa to 90 MPa, for example, 75 MPa to 85 MPa. When the strain hardening rate of the polyethylene resin composition is within the above range, the resistance to slow crack growth is excellent to allow long term use of pipes and provide large-diameter pipes having excellent durability.

The polyethylene resin composition may have a zero shear viscosity $(\eta^0)$ of 6,000,000 poise to 20,000,000 poise, for example, 6,000,000 poise to 10,000,000 poise, or 6,000,000 poise to 8,000,000 poise. The zero shear viscosity may be obtained by measuring storage modulus and loss modulus according to shear rate (unit rad/sec). When the zero shear viscosity of the polyethylene resin composition is within the above range, resistance to sagging upon pipe processing, specifically, large-diameter pipe processing may be excellent, and the polyethylene resin composition may thus be usefully used for manufacturing large-diameter pipes.

The polyethylene resin composition may have a melt strength of 170 mN to 300 mN, for example, 170 mN to 250 mN, 175 mN to 200 mN. The melt strength may be obtained by measuring force for stabilization with an increase in the pulling rate of the resin at a resin temperature of 200 °C and a chamber temperature of 180 °C. When the melt strength of the polyethylene resin composition is within the above range, resistance to sagging upon pipe processing, specifically, large-diameter pipe processing may be excellent, and the polyethylene resin composition may thus be usefully used for manufacturing large-diameter pipes.

In the polyethylene resin composition, a rate of reduction in drop time in the presence of sagging versus drop time in the absence of sagging upon extrusion may be 0% to 22%, for example 10% to 22%, 15% to 22%. The drop time may be measured using a single screw extruder. Specifically, under the conditions of a temperature of 200 °C upon extrusion, an extrusion amount of 38.1 g/min, and an initial linear velocity of an extruded resin of 0.546 cm/sec, when the height to the ground is 90.5 cm and the extruded resin does not sag, with respect to a case where the time to reach the ground is 165.7 seconds, time that the polyethylene resin composition reaches the ground may be measured to determine reduction rate relative to the case where the above sagging is not caused. When the reduction rate of drop time is within the above range, resistance to sagging upon pipe processing, specifically, large-diameter pipe processing may be excellent, and the polyethylene resin composition may thus be usefully used for manufacturing large-diameter pipes.

Hereinafter, a method of preparing the polyethylene resin composition for pipe according to another embodiment will be described.

Another embodiment provides a method of preparing a polyethylene resin composition for pipe including: injecting a monomer, a catalyst, and a comonomer into a two-stage reactor to obtain a polyethylene resin; and making the polyethylene resin pass through a twin screw extruder to obtain a polyethylene resin composition, wherein the twin screw extruder is operated at a temperature of 230 °C to 250 °C, and the polyethylene resin obtained after passing through the two-stage reactor has a melt index (MI) (under a load of 5 kg, at 190 °C) of 0.30 g/10 min to 0.38 g/10 min.

The twin screw extruder may be operated at a condition of 1050 rpm to 1150 rpm.

To be specific, ethylene polymerization is performed using an ethylene monomer, a ziegler-natta catalyst and a 1-hexene co-monomer through series polymerization in a two-stage reactor where two reactors are connected in series to prepare a polyethylene resin. Then, the polyethylene resin prepared in the two-stage reactor subjected to passing through a twin screw extruder to obtain a polyethylene resin composition for pipe. In this case, the twin screw extruder may be operated at a temperature of 230 °C to 250 °C, for example, 235 °C to 245 °C.

In addition, the polyethylene resin obtained after passing through the two-stage reactor may have a melt index (MI) (under a load of 5 kg, at 190 °C) of 0.30 g/10 min to 0.38 g/10 min, for example, 0.33 g/10 min to 0.38 g/10 min.

When the melt index (MI) (under a load of 5 kg, at 190 °C) of the polyethylene resin obtained by passing through the two-stage reactor is in the above range, and the polyethylene resin is subjected to passing through the twin screw extruder at the above temperature conditions to prepare a polyethylene resin composition, in the polyethylene resin composition, a rate of change in the melt index (MI) (under a load of 5 kg, at 190 °C) by passing through the twin screw extruder may be obtained in the range of 10% to 45%, and accordingly, a polyethylene resin composition for pipe in which the resistance to sagging of pipe, the resistance to slow crack growth, and the odor level as well are all good may be obtained. The rate of change in the melt index (MI) by passing through the twin screw extruder may be obtained according to Equation 1 as described above.

The polyethylene resin composition for pipe after passing through the twin screw extruder may have a melt index (MI) (under a load of 5 kg, at 190 ° C) of 0.10 g/10 min or more and less than 0.25 g/10 min, for example, 0.10 g/10 min to 0.24 g/10 min, 0.10 g/10 min to 0.23 g/10 min, 0.10 g/10 min to 0.22 g/10 min, or 0.18 g/10 min to 0.22 g/10 min. When the melt index (MI) of the polyethylene resin composition is within the above range, processing load and surface roughness of products are reduced upon pipe processing, and resistance to sagging of pipe and strain hardening modulus thereof may be increased. Accordingly, a polyethylene resin composition for pipe in which the resistance to sagging of pipe, the resistance to slow crack growth, and the odor level are all good may be obtained.

In the stage of obtaining the polyethylene resin composition for pipe, an additive including an antioxidant, a neutralizing agent, or a combination thereof may be further included. The additive may be included in an amount of 0.01 parts by weight to 0.5 parts by weight with respect to 100 parts by weight of the polyethylene resin composition for pipe.

The antioxidant may include

1,3,5-trimethyl-2,4,6-tris(3,5-di-tert-butyl-4-hydroxybenzyl)benzene,
1,6-bis[3-(3,5-di-tert-butyl-4-hydroxyphenyl)propionamido]hexane,
1,6-bis[3-(3,5-di-tert-butyl-4-hydroxyphenyl)propionamido]propane,
tetrakis[methylene(3,5-di-tert-butyl-4-hydroxyhydrocinnamate)]methane,
bis(2,6-di-tert-butyl-4-methylphenyl)pentaerythritol-di-phosphite,
bis(2,4-di-tert-butylphenyl)pentaerythritol-di-phosphite, or a combination thereof.

The antioxidant may be included in an amount of 0.01 parts by weight to 0.5 parts by weight, for example, 0.2 parts by weight to 0.4 parts by weight, with respect to 100 parts by weight of the polyethylene resin composition for pipe. When the antioxidant is included in the above amount range, corrosion and discoloration caused by oxidation of pipes may be prevented.

The neutralizing agent may include calcium stearic acid, zinc stearic acid, magnesium aluminum hydroxy carbonate, zinc oxide, magnesium hydroxy stearic acid, or a combination thereof.

The neutralizing agent may be included in an amount of 0.01 parts by weight to 0.3 parts by weight, for example, 0.1 parts by weight to 0.2 parts by weight, with respect to 100 parts by weight of the polyethylene resin composition.

Another embodiment provides a molded article prepared from the polyethylene resin composition for pipe.

The molded article may be a pipe used for a water pipe, a sewage pipe, an industrial pipe, and the like, specifically a large-diameter pipe having a large diameter.

The polyethylene resin composition for pipe is superior in the resistance to sagging of the pipe, the resistance to slow crack growth, and the odor level all together, and may thus be usefully used for large-diameter pipes.

Hereinafter, specific examples of the present invention are presented. However, the following examples are merely used to illustrate or describe the present invention in more detail, and are not to be seen as limiting the present invention. Furthermore, what is not described herein may be sufficiently understood by those skilled in the art who have knowledge in this field, and thus are omitted.

**(Preparation of polyethylene resin composition)**

Conditions of Example 1 and Comparative Examples 1 to 5 are shown in Table 1 below.

**Example 1**

An ethylene monomer, a ziegler-natta catalyst, and a 1-hexene co-monomer were injected into a two-stage reactor in which two reactors were connected in series through series polymerization to perform ethylene polymerization.

A powder-type polyethylene resin obtained through the two-stage reactor had a melt index (MI) (under a load of 5 kg, at 190 °C) of 0.35 g/10 min.

0.15 parts by weight of Irganox 1010 and 0.15 parts by weight of Irgafos-168 as antioxidants, and 0.15 parts by weight of calcium stearic acid as a neutralizing agent were mixed to 100 parts by weight of the powdered polyethylene resin obtained through the two-stage reactor with a Henschel mixer, and then to prepare a polyethylene resin composition in the form of pellets using a twin screw extruder. In this case, a screw having a diameter of 608 mm and an LID (screw length/diameter) of 8 was used as the twin screw extruder, and the twin screw extruder was operated at a temperature of 240 °C and a rate of 1,090 rpm.

The polyethylene resin composition in the form of pellets prepared therefrom had a melt index (MI) (under a load of 5 kg, at 190 °C) of 0.21 g/10 min.

**Comparative Example 1**

A polyethylene resin composition was prepared in the same manner as in Example 1 according to the composition and conditions in Table 1 below.

The powder-type polyethylene resin obtained after passing through the two-stage reactor had a melt index (MI) (under a load of 5 kg, at 190 °C) of 0.40 g/10 min. The polyethylene resin composition in the form of pellets prepared therefrom had a melt index (MI) (under a load of 5 kg, at 190 °C) of 0.25 g/10 min.

**Comparative Example 2**

A polyethylene resin composition was prepared in the same manner as in Example 1 according to the composition and conditions in Table 1 below.

The polyethylene resin composition obtained through the two-stage reactor had a melt index (MI) (under a load of 5 kg, at 190 °C) of 0.40 g/10 min, 0.0024 parts by weight of Trigonox 101 was added as peroxide upon extrusion, and a polyethylene resin composition in the form of pellets prepared therefrom had a melt index (MI) (under a load of 5 kg, at 190 °C) of 0.21 g/10 min.

**Comparative Example 3**

A polyethylene resin composition was prepared in the same manner as in Example 1 according to the composition and conditions in Table 1 below.

The polyethylene resin composition obtained through the two-stage reactor had a melt index (MI) (under a load of 5 kg, at 190 °C) of 0.40 g/10 min, the twin screw extruder was operated at a temperature of 252 °C and a rate of 1,140 rpm, and a polyethylene resin composition in the form of pellets prepared therefrom had a melt index (MI) (under a load of 5 kg, at 190 °C) of 0.21 g/10 min.

**Comparative Example 4**

A polyethylene resin composition was prepared in the same manner as in Example 1 according to the composition and conditions in Table 1 below.

The powder-type polyethylene resin obtained after passing through the two-stage reactor had a melt index (MI) (under a load of 5 kg, at 190 °C) of 0.41 g/10 min.

A polyethylene resin composition in the form of pellets was prepared using a single screw extruder, and in this case, a screw having a diameter of 40 mm and an LID (screw length/diameter) of 33 was used as the single screw extruder, and the single screw extruder was operated at a temperature of 200 °C and a rate of 90 rpm.

Additionally, 0.02 parts by weight of Trigonox 101 was added as peroxide upon extrusion, and the polyethylene resin composition in the form of pellets prepared therefrom had a melt index (MI) (under a load of 5 kg, at 190 °C) of 0.20 g/10 min.

**Comparative Example 5**

A polyethylene resin composition was prepared in the same manner as in Example 1 according to the composition and conditions in Table 1 below.

The powder-type polyethylene resin obtained after passing through the two-stage reactor had a melt index (MI) (under a load of 5 kg, at 190 °C) of 0.35 g/10 min.

A polyethylene resin composition in the form of pellets was prepared using a single screw extruder, and in this case, a screw having a diameter of 40 mm and an LID (screw length/diameter) of 33 was used as the single screw extruder, and the single screw extruder was operated at a temperature of 200 °C and a rate of 90 rpm.

Additionally, 0.013 parts by weight of Trigonox 101 was added as peroxide upon extrusion, and the polyethylene resin composition in the form of pellets prepared therefrom had a melt index (MI) (under a load of 5 kg, at 190 °C) of 0.20 g/10 min.

[Table 1]

| | | Example 1 | Comparative Example 1 | Comparative Example 2 | Comparative Example 3 | Comparative Example 4 | Comparative Example 5 |
|---|---|---|---|---|---|---|---|
| MI (g/10min) | After passing through two-stage reactor | 0.35 | 0.40 | 0.40 | 0.40 | 0.41 | 0.35 |
| | After passing through extruder | 0.21 | 0.25 | 0.21 | 0.21 | 0.20 | 0.20 |
| Peroxide amount (parts bv weight) | | - | - | 0.0024 | - | 0.02 | 0.013 |
| Extruder type | | Twin screw extruder | Twin screw extruder | Twin screw extruder | Twin screw extruder | Single screw extruder | Single screw extruder |
| Extruder diameter (mm) | | 608 | 608 | 608 | 608 | 40 | 40 |
| Extruder LID | | 8 | 8 | 8 | 8 | 33 | 33 |
| Extrusion rate (rpm) | | 1,090 | 1,090 | 1,090 | 1,140 | 90 | 90 |
| Extrusion temperature (°C) | | 240 | 240 | 240 | 252 | 200 | 200 |
| MI change rate by extruder (%) | | 40 | 38 | 48 | 48 | 51 | 43 |

**Evaluation 1: Measurement of physical properties of polyethylene resin composition**

The following physical properties were measured for polyethylene resin compositions prepared in Example 1 and Comparative Examples 1 to 5, and the results are shown in Table 2 below.

Melt index (MI)

In according with ASTM D1238, the melt index was measured under a load of 5 kg at 190 °C.

Rate of change in melt index (MI)

The rate of change in the melt index by an extruder was obtained through Equation 1 below.

[Equation 1]

$$\{(\text{MI after passing through two-stage reactor} - \text{MI after passing through twin screw extruder}) / (\text{MI after passing through two-stage reactor})\} \times 100$$

Zero shear viscosity $(\eta^0)$

Using an advanced rheometer expansion system (ARES, 190 °C), storage modulus G' and loss modulus G" according to shear rate (unit rad/sec) were measured and zero shear viscosity $\eta^0$ was calculated through Carreau model.

Melt strength

Force for stabilization with an increase in the pulling rate of a resin at a resin temperature of 200 °C and a chamber temperature of 180 °C was measured.

Drop time reduction rate

A HAAKE™ Rheomex OS single screw extruder was used, and a die having a diameter of 12 mm in the form of a bar was used. Temperature was set to 200 °C, extrusion rate was maintained at 38.1 g/min, and initial linear velocity of an extruded resin was 0.546 cm/sec. Height to the ground was 90.5 cm, and when the extruded resin did not sag, the time to reach the ground was 165.7 seconds. By measuring the time that each polyethylene resin composition reached the ground, the reduction rate relative to a case of no sagging was calculated.

Strain hardening modulus (SHM)

It was measured in accordance with ISO 18488.

Odor

100 g of the polyethylene resin composition and 5 mL of water were put into an airtight container, left in an oven at 80 °C for 3 hours, and then left at room temperature for 1 hour to evaluate odor level. The worse the odor level, the higher the score, and the score was rated on a scale of 1 to 5.

[Table 2]

| | Example 1 | Comparative Example 1 | Comparative Example 2 | Comparative Example 3 | Comparative Example 4 | Comparative Example 5 |
|---|---|---|---|---|---|---|
| Strain hardening modulus (MPa) | 78 | 64 | 65 | 68 | 44 | 54 |
| Zero shear viscosity (poise) | 6,445,000 | 3,023,000 | 7,033,000 | 6,803,000 | 15,380,000 | 9,958,000 |
| Melt strength (mN) | 181 | 172 | 180 | 185 | 238 | 197 |
| Drop time (sec) | 132 | 127 | 134 | 133 | 151 | 139 |
| Drop time reduction rate (%) | 20 | 23 | 19 | 20 | 9 | 16 |
| Odor | 2.2 | 2.1 | 3.2 | 3.3 | 4.0 | 3.5 |

Referring to Tables 1 and 2, in Comparative Example 1, the powder-type polyethylene resin obtained by passing through a two-stage reactor had a melt index (MI) (under a load of 5 kg, at 190 °C) of 0.40 g/10 min, which was higher than that of Example 1, and this caused the final melt index (MI) to be 0.25 g/10 min, which was outside the range of the polyethylene resin composition for pipe according to an embodiment. In this case, compared to Example 1, Comparative Example 1 had greatly reduced strain hardening rate to cause a significant reduction in the resistance to slow crack growth, the zero shear viscosity, and the melt strength, and a significant increase in the reduction rate of drop time, indicating a sharp reduction in the resistance to sagging of pipe.

In Comparative Example 2, a rate of change in the melt index (MI) (under a load of 5 kg, at 190 °C) by an extruder with the addition of peroxide was 48%, which is outside the range of the polyethylene resin composition for pipe according to an embodiment. In this case, compared to Example 1, Comparative Example 2 had a similar level of the melt strength and reduction rate of drop time, but had a slight increase in the zero shear viscosity to cause greater resistance to sagging of pipe, and still had a significant reduction in the strain hardening rate to cause a sharp decrease in the resistance to slow crack growth, and had an increase in the odor level.

Comparative Example 3 is a case of passing through an extruder outside the temperature conditions of the method for preparing a polyethylene resin composition for pipe according to an embodiment, and in Comparative Example 3, a rate of change in the melt index (MI) (under a load of 5 kg, at 190 °C) was 48%, which is outside the range of the polyethylene resin composition for pipe according to an embodiment. In this case, it is seen that, compared to Example 1, Comparative Example 3 had the same level of the reduction rate of drop time, and had an increase in the zero shear viscosity and melt strength to cause greater resistance to sagging of pipe, but had a significant reduction in the strain hardening rate to cause a sharp decrease in the resistance to slow crack growth, and had an increase in the odor level.

Comparative Example 4 is a case of adding an excessive amount of peroxide in extrusion conditions of low shear stress using a single screw extruder, and in Comparative Example 4, a rate of change in the melt index (MI) (under a load of 5 kg, at 190 °C) was 51%, which is outside the range of the polyethylene resin composition for pipe according to an embodiment. In this case, it is seen that, compared to Example 1, Comparative Example 4 had an increase in the zero shear viscosity and melt strength and a decrease in the reduction rate of drop time to cause a significant increase in the resistance to sagging of pipe, but had a great reduction in the strain hardening rate to cause a sharp decrease in the resistance to slow crack growth, and had a significant increase in the odor level.

Comparative Example 5 is a case of adding an excessive amount of peroxide in extrusion conditions of low shear stress using a single screw extruder, and the case is outside the range of the polyethylene resin composition for pipe according to an embodiment. In Comparative Example 5, the powder-type polyethylene resin obtained after the two-stage reactor had a melt index (under a load of 5 kg, at 190 °C) of 0.35 g/10 min, which was lower than that of Comparative Example 4, and thus a relatively small amount of peroxide was added. Yet, it is seen that, compared to Example 1, due to the addition of a high amount of peroxide, Comparative Example 5 had a great reduction in the strain hardening rate to cause a significant decrease in the resistance to slow crack growth, and had a significant increase in the odor level.

Accordingly, it is seen that the polyethylene resin composition for pipe according to an embodiment is superior in the resistance to sagging of pipe, the resistance to slow crack growth, and the odor level all together, and may thus be usefully used for manufacturing pipes, particularly large-diameter pipes.

A polyethylene resin composition for pipe according to an embodiment is superior in resistance to sagging of pipe, resistance to slow crack growth, and an odor level all together, and may thus be usefully used for manufacturing pipes, particularly large-diameter pipes.

Although preferred embodiments of the present invention have been described above, the present invention is not limited thereto and may be embodied by being modified in various ways within the scope of the claims and the detailed description. Such modifications belong to the scope of the present invention.

**Claims**

1. A polyethylene resin composition for pipe, which has a melt index (MI) (under a load of 5 kg, at 190 °C) of 0.10 g/10 min or more and less than 0.25 g/10 min, and is prepared by passing through a two-stage reactor and a twin screw extruder,

    wherein a rate of change in the melt index (MI) (under a load of 5 kg, at 190 °C) by passing through the twin screw extruder is 10% to 45% according to Equation 1 below:

    [Equation 1]

    $$\{(\text{MI after passing through two-stage reactor} - \text{MI after passing through twin screw extruder}) / (\text{MI after passing through two stage reactor})\} \times 100$$

2. The polyethylene resin composition for pipe of claim 1, wherein the polyethylene resin composition has a strain hardening modulus of 70 MPa to 90 MPa.

3. The polyethylene resin composition for pipe of claim 1, wherein the polyethylene resin composition has a zero shear viscosity ($\eta^0$) of 6,000,000 poise to 20,000,000 poise.

4. The polyethylene resin composition for pipe of claim 1, wherein the polyethylene resin composition has a melt strength of 170 mN to 300 mN.

5. The polyethylene resin composition for pipe of claim 1, wherein in the polyethylene resin composition, a rate of reduction in drop time in the presence of sagging versus drop time in the absence of sagging upon extrusion is 0% to 22%.

6. A method of preparing a polyethylene resin composition for pipe, the method comprising:

    injecting a monomer, a catalyst, and a comonomer into a two-stage reactor to obtain a polyethylene resin; and
    making the polyethylene resin pass through a twin screw extruder to obtain a polyethylene resin composition,
    wherein the twin screw extruder is operated at a temperature of 230 °C to 250 °C, and
    the polyethylene resin obtained after passing through the two-stage reactor has a melt index (MI) (under a load of 5 kg, at 190 °C) of 0.30 g/10 min to 0.38 g/10 min.

7. The method of claim 6, wherein the twin screw extruder is operated at a condition of 1050 rpm to 1150 rpm.

8. The method of claim 6, wherein the polyethylene resin composition after passing through the twin screw extruder has a melt index (MI) (under a load of 5 kg, at 190 °C) of 0.10 g/10 min or more and less than 0.25 g/10 min.

9. A molded article prepared from the polyethylene resin composition for pipe according to any one of claims 1 to 5.

Europäisches
Patentamt

European
Patent Office

Office européen
des brevets

# EUROPEAN SEARCH REPORT

Application Number

EP 23 21 5829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 798 002 B1 (INEOS OLEFINS & POLYMERS USA [US]) 19 August 2020 (2020-08-19) <br> * examples 7, 8 * <br> * claims 1-11 * <br> ----- | 1-9 | INV. <br> C08F210/16 <br> C08F2/00 <br> C08F4/652 <br> C08L23/06 <br> C08L23/08 |
| X <br><br> A | EP 2 860 202 B1 (BOREALIS AG [AT]) 30 May 2018 (2018-05-30) <br> * examples 1-5 * <br> * claims 1-14 * <br> ----- | 1,9 <br><br> 2-8 | |

TECHNICAL FIELDS
SEARCHED      (IPC)

C08F
C08L

The present search report has been drawn up for all claims

| Place of search | Date of completion of the search | Examiner |
|---|---|---|
| Munich | 6 May 2024 | Neumeier, Michael |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 23 21 5829

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2024

| Patent document cited in search report | | Publication date | Patent family member(s) | | Publication date |
|---|---|---|---|---|---|
| EP 2798002 | B1 | 19-08-2020 | BR 112014016166 A2 | | 13-06-2017 |
| | | | CN 104684989 A | | 03-06-2015 |
| | | | EP 2798002 A2 | | 05-11-2014 |
| | | | ES 2831165 T3 | | 07-06-2021 |
| | | | RU 2014131120 A | | 20-02-2016 |
| | | | US 2015025195 A1 | | 22-01-2015 |
| | | | US 2018127573 A1 | | 10-05-2018 |
| | | | WO 2013101767 A2 | | 04-07-2013 |
| EP 2860202 | B1 | 30-05-2018 | AU 2014334203 A1 | | 03-03-2016 |
| | | | CN 105612185 A | | 25-05-2016 |
| | | | EP 2860202 A1 | | 15-04-2015 |
| | | | JP 6212633 B2 | | 11-10-2017 |
| | | | JP 2016536387 A | | 24-11-2016 |
| | | | KR 20160033766 A | | 28-03-2016 |
| | | | PL 2860202 T3 | | 30-11-2018 |
| | | | WO 2015051882 A1 | | 16-04-2015 |

EPO FORM P0459

For more details about this annex : see Official Journal of the European Patent Office, No. 12/82